Europäisches Patentamt

European Patent Office

Office européen des brevets

(11) Veröffentlichungsnummer: **0 335 185**
**A2**

(12) **EUROPÄISCHE PATENTANMELDUNG**

(21) Anmeldenummer: 89104666.6

(22) Anmeldetag: 16.03.89

(51) Int. Cl.⁴: **H01B 1/22 , C09K 7/06**

(30) Priorität: 29.03.88 DE 3810597

(43) Veröffentlichungstag der Anmeldung:
04.10.89 Patentblatt 89/40

(84) Benannte Vertragsstaaten:
**BE CH DE FR GB IT LI NL**

(71) Anmelder: **BAYER AG**

**D-5090 Leverkusen 1 Bayerwerk(DE)**

(72) Erfinder: **Mazanek, Jan, Dr.**
**Haferkamp 2**
**D-5000 Köln 80(DE)**
Erfinder: **Giesecke, Henning, Dr.**
**Düsseldorfer Strasse 49**
**D-5000 Köln 80(DE)**
Erfinder: **Goldmann, Gerd, Dr.**
**Emil-Feinendegen-Strasse 1**
**D-4150 Krefeld 12(DE)**
Erfinder: **von Gizycki, Ulrich, Dr.**
**Wiembachallee 24**
**D-5090 Leverkusen 3(DE)**
Erfinder: **Wolf, Gerhard Dieter, Dr.**
**Wilhelm-Busch-Strasse 29**
**D-4047 Dormagen 5(DE)**

(54) **Metallisierte Fasern enthaltende Verbundstoffe sowie deren Verwendung zur Herstellung von elektromagnetisch abschirmenden Formteilen.**

(57) Zur Herstellung von elektromagnetisch abschirmenden Formteilen im Spritzgußverfahren eignen sich hervorragend Verbundstoffe, die metallisierte Fasern enthalten, welche mit einer oder mehreren Polymerbeschichtungen versehen sind. Bevorzugtes Fasermaterial sind verkupferte Glasfasern, die eine Thermoplast-Beschichtung aufweisen.

EP 0 335 185 A2

**Metallisierte Fasern enthaltende Verbundstoffe sowie deren Verwendung zur Herstellung von elektromagnetisch abschirmenden Formteilen**

Als Materialien für die Gehäuse elektrischer und elektronischer Geräte werden meistens Kunststoffe eingesetzt. Kunststoffe sind als elektrische Nichtleiter in der Regel weitgehend durchlässig für elektromagnetische Strahlung. Beim Betrieb solcher Geräte kommt es häufig zu einer ungewollten Erzeugung hochfrequenter Signale bzw. derartige Geräte sind störempfindlich gegen elektromagnetische Fremdstrahlung. Insbesondere die weitgehende Miniaturisierung von elektronischen Bauteilen hat deren Störanfälligkeit vor Fremdstrahlung stark erhöht.

Ausdruck dieser Entwicklung ist auch, daß es bereits eine Reihe nationaler Vorschriften (FCC, EEC, VDE, DIN) gibt, die eine Begrenzung der erzeugten Störfeldstärken beinhalten. Bereits heute werden eine Reihe von Maßnahmen angewendet, Kunststoffteile abschirmend auszurüsten. Als Beispiele seien die chemische und physikalische Metallisierung der Oberflächen, das Aufbringen leitfähiger Lacke und das Flammsprühverfahren genannt. Auch das Beimengen von abschirmend wirkenden Zusatzstoffen zu den Kunststoffen wird seit einiger Zeit versucht und auch technisch angewandt. Als Beispiele seien Zusätze von Stahlfasern, Kohlstoffasern, Metallflakes, Metallpulver und von metallisierten Fasern genannt. Ein universell anwendbares preisgünstiges Verfahren zur Abschirmung von Kunststoffgehäusen ist bisher nicht gefunden worden. Den Metallisierungsverfahren steht bisher ihr hoher Preis bedingt durch viele Verfahrensschritte und damit hohen technischen Investitionen entgegen. Zudem sind die erzeugten Metalloberflächen entweder zu empfindlich oder zu unansehnlich, so daß sie mit einer zusätzlichen Lackschicht versehen werden müssen.

Auch die Beimengung von abschirmend wirkenden Zusätzen hat sich bisher nicht durchsetzen können. Hauptursachen dafür waren entweder der hohe Preis der Zusätze, die hohen Mengen an Zusätzen und die damit verbundene Beeinträchtigung der mechanischen Kenndaten der Kunststoffmaterialien und die Beeinträchtigung der Oberflächenqualität, Ungleichmäßigkeiten bei der Verteilung der Füllstoffe in den Kunststoffen oder die Beeinträchtigung der Abschirmwirkung der Füllstoffe durch den Verarbeitungsprozeß.

Im Zusammenhang mit der elektromagnetischen Abschirmung ist es wichtig anzugeben, welche Frequenzbereiche und welche Komponenten des elektromagnetischen Feldes in welchem Umfang abgeschirmt werden müssen. Während einer Abschirmung hochfreqenter Felder (GHz-Bereich) im Fernfeld und die Abschirmung der eletrischen Komponente niederfrequenter Felder im Nahfeld noch relativ einfach technisch zu bewältigen ist, bereitet insbesondere die Abschirmung der magnetischen Komponente niederfrequenter Felder (MHz-Bereich) in Nahfeld große technische Probleme.

Selbstverständlich hat es auch eine Reihe von Versuchen gegeben, thermoplastische Materialien mit abschirmend wirkenden Füllstoffen so auszurüsten, daß daraus spritzgegossene Gehäuseteile hinreichend abschirmen. Unter anderem ist auch die Einarbeitung metallisierter Glasfasern versucht worden. Sie scheiterte aber insbesondere daran, daß, bedingt durch die hohen Scherkräfte beim Spritzguß, die Fasern sehr stark verkleinert und die Metallschicht weitgehend von den Faseroberflächen abgerieben wurden. Beides hat eine starke Beeinträchtigung der abschirmenden Wirkung zur Folge.

Es wurde nun überraschenderweise gefunden, daß man diese Nachteile weitgehend vermeiden kann, wenn man zur Herstellung der Formkörper im Spritzguß solche metallisierte Fasern enthaltenden Verbundstoffe verwendet, bei denen die Fasern mit mehreren Polymer-Beschichtungen von mindestens 5 Gew.-%, bezogen auf den Verbundstoff, versehen sind.

Eingesetzt werden können Beschichtungen von 5 bis 95%, bevorzugt Beschichtungen von 7 - 70 Gew.-%, ganz besonders bevorzugt solche von 10 - 30 Gew.-% oder 60 bis 90 Gew.-%.

Als besonders günstig im Sinne der Erfindung hat es sich erwiesen, die Fasern mit 2 verschiedenen Coatings auszurüsten, wobei beispielsweise die erste Beschichtung mit einem elastischen und die zweite mit einem thermoplastischen Material oder die erste Beschichtung mit einem niedrigschmelzenden und die zweite mit einem hochschmelzenden Material oder aber die erste Beschichtung mit einem nicht schmelzenden und die zweite mit einem schmelzenden Material erfolgen kann. Selbstverständlich sind auch andere Kombinationen möglich.

Als Beschichtung im Sinne der Erfindung seien beispielsweise genannt:

Lösungen von Polymeren oder niedermolekularen Stoffen in Wasser oder organischen Lösungsmitteln, beispielsweise Polycarbonat/Methylenchlorid, Cellulose/Wasser, Polyamid/N-Methylpyrrolidon usw. Es können auch flüssige Verbindungen eingesetzt werden; bevorzugt werden hier reaktionsfähige Stoffe wie polymerisierbare ungesättigte Monomere UP- oder Epoxidharze oder Polyurethan-Vorkondensate, die gegebenenfalls auch Lösungsmittel enthalten können.

Weiterhin können schmelzbare Pulver von nieder- oder hochmolekularen Stoffen verwendet werden, wie z.B. Ethylen-Vinylacetat-Copolymere oder verschiedene Pulver-Beschichtungsmaterialien. Besonders geeignet sind Dispersionen von Polymeren in Wasser oder organischen Lösungsmitteln.

Als Beispiele seien nachfolgende Dispersionen genannt: Acrylsäureester-Styrol-Copolymere, Styrol-Butadien- und Styrol-Butadien-N-Vinylpyridin-Copolymere, Chlorbutadien- und Polybutadien-(Co)polymere, Butadien-Acrylnitril-Polymere, carboxylierte Styrol-Butadien-Copolymere, Chloropren-(Co)polymere, Styrol-Acrylnitril-Polymerisate, Polyolefin-Dispersionen oder Dispersionen von Wachsen unterschiedlicher Provenienz. Selbstverständlich können auch geeignete Abmischungen dieser Dispersionen verwendet werden. Besonders bevorzugt sind solche Polymere, die durch eine nachträgliche Vernetzungsreaktion in einen eleastischen bzw. unlöslichen Zustand überführt werden können, wie z.B. Butadien enthaltende Co- und Pfropfpolymere.

Geeignet sind auch beliebige schmelzbare bzw. thermoplastische Stoffe, insbesondere Polymere, die z.B. durch Schmelzcoaten auf die metallisierten Fasern aufgebracht werden können. Bevorzugt werden solche Materialien eingesetzt, deren Schmelzpunkt über dem Schmelzpunkt der vorgesehenen Thermoplastmatrix, in die die erfindungsgemäßen Fasern eingearbeitet werden sollen, liegt. Besonders bevorzugt ist der Einsatz dieser Stoffe als 2. Coating in Verbindung mit z.B. einer Beschichtung mit den o.g. Latices. Als Beispiele solcher Polyer/Matrix-Kombinationen seien genannt: Polybutadien-Styrol-N-vinyl-pyridin/Polyamid 66/Polyamid 6, Polyalkylacrylat-Styrol/Polyphenylensulfid/Polybutylenterephthalat, polyamidimid/Polyamid 66/Polyacrylnitril-styrol-butadien-Copolymer oder Polyalkylacrylat-styrol/Polycarbonat/Polyamid 6, Polybutadien-Styrol-N-vinyl-pyridin/Polyamid 66/Polycarbonat, Polybutadien-Styrol-N-vinyl-pyridin/Polycarbonat/Blend aus Polyacrylnitril-styrol-butadien und Polycarbonat.

Das Beschichten der metallisierten Fasern kann auf herkömmliche Art erfolgen, beispielsweise durch Tauchen, Aufsprühen, Pulverbeschichten, Eindampfen von Lösungen oder Dispersionen, Schmelzcoaten, (Co-)Extrudieren. Selbstverständlich können auch reaktionsfähige Beschichtungsmaterialien eingesetzt werden, wie bei spielsweise RIM-Polyurethan.

Beim Beschichten von Faserbündeln hat es sich als günstig erwiesen, diese durch geeignete Maßnahmen aufzubrechen.

Als Fasern eignen sich organische oder anorganische Fasern, wie beispielsweise Materialien aus Polyester, Polyamid, Polyalkylen, Polyacrylnitril, Polyaramiden, Baumwolle, Wolle, Glas, Kohlenstoff, Graphit, Keramik, Aluminiumoxid. Besonders bevorzugt werden metallisierte Verstärkungsfasern als Trägermaterial, da sie den zusätzlichen Vorteil einer Verbesserung der mechanischen und thermischen Eigenschaften der abschirmend ausgerüsteten Thermoplaste bewirken.

Die Einarbeitung der beschichteten metallisierten Fasern kann beispielsweise durch Zumischung zum Granulat, durch Compoundierung, durch Verpressen oder durch eine getrennte Zugabe in den Extruder erfolgen. Bevorzugt werden solche Einarbeitungsbedingungen, bei denen nur zu einer kurzen thermischen und mechanischen Belastung der Fasern kommt.

Als Thermoplaste können alle bekannten thermoplastischen Polymere sowie deren Mischungen und Blends eingesetzt werden. Als Beispiele seien genannt: Polyolefine wie Polyethylen, Polypropylen oder Polyisobutylen, verschiedene Copolymerisate wie Ethylen-Vinylacetat-Copolymere und deren teilhydrohysierte Derivate, Polyvinylchlorid, fluorhaltige Polymere, Polyacetate, Polystyrol und Styrol-Copolymerisate, insbesondere mit Acrylnitril und Butadien, Polyamide unterschiedlichster Zusammensetzung Polyalkylenterephtalate, aromatische aliphatische und gemischte (Co)polyester, Polycarbonat, Polyphenylenoxid und -sulfid, Polysulfone, Polyethylsulfone, Celluloseester oder thermoplastische Polyurethane. Polyharnstoffe und andere Polymere nach dem Polyisocyanat-Polyadditionsverfahren. Als Polymerblends sei beispielsweise Produkte aus Styrol/Acrylnitril/Butadien-Copolymer und Polycarbonat genannt.

Die eingesetzten Polymere können außer verschiedenen organischen Hilfsstoffen und Pigmenten auch verschiedene Füllstoffe enthalten, wie z.B. Silikate, Kaolin, Kreide oder andere Carbonate, Ruß, organische oder anorganische Fasern , sowie Kohlenstoff- oder Graphitfasern, Glas, Aramid usw..

Die Metallisierung erfolgt auf herkömmlicher Weise, beispielsweise durch stromloses und/oder galvanisches Metallisieren, durch Bedampfen oder Sputtern. Bevorzugt verwendet werden stromlos metallisierte Fasern, da bei diesem Verfahren eine besonders gleichmäßige Verteilung der Metallauflage und eine gute Haftung des Metalls auf den Oberflächen erreicht werden kann. Als Metalle kommen insbesondere Aluminium, Eisen, Kobalt, Nickel, Kupfer, Silber und Gold oder deren Legierungen auch mit anderen Elementen in Betracht. Bei der stromlosen Metallisierung wird besonders bevorzugt, Nickel oder Kupfer abgeschieden, wobei es notwendig sein kann, die Kupferschichten mit einer dünnen Nickelauflage als Oxidationsschutz zu versehen.

Die beschichteten, metallisierten Fasern können sowohl als ganzes (beispielsweise als Rovings) als auch in zerkleinerter Form (beispielsweise Flock, Kurzschnitt, Whisker) in die thermoplastischen Materialien eingearbeitet werden. Selbstverständlich kommt es bei Verwendung von endlosen Materialien während des

3

EP 0 335 185 A2

Spritzvorganges zu einer Verkleinerung und Zerschneidung der Fasern.

Die erfindungsgemäßen Verbundstoffe können als solche oder gemeinsam mit Thermoplast-Pellets im Spritzguß, beim Extrudieren und Kalandrieren, eingesetzt werden.

Das erfindungsgemäße Verfahren ist sofern überraschend, als die Lehrmeinung sagt, daß zum Erreichen einer hinreichend guten Abschirmwirkung eine möglichst gleichmäßige Verteilung der metallisierten Fasern erforderlich ist. Das Beschichten der Fasern führt aber zu einem starken Verkleben der Faserbündel und müßte eigentlich die gleichmäßige Verteilung verhindern. Überraschenderweise werden aber offensichtlich während des Spritzvorgangs die gecoateten Faserbündel aufgebrochen, ohne daß es zu dem erwarteten starken Metallabrieb kommt.

Die folgenden Beispiele erläutern die Erfindung näher, ohne sie jedoch zu beschränken. Die dabei verwendeten Produktbezeichnungen sind z.T. eingetragene Warenzeichen.

Beispiel A:

Glasfaserrovings (E-Glas; 2400 tex) werden kontinuierlich mit einer Lösung von 0,3 g/l Butadienpalladiumdichlorid in einer 1,1,1,-Trichlorethan aktiviert und getrocknet. Anschließend werden sie kontinuierlich in einem aminboranhaltigen Nickelbad (Ni:1,2 g/l; Aminboran: 2 g/l) 40 Min. vernickelt. Die metallisierten Fasern werden gespült, getrocknet und beschichtet.

Beispiel B:

Glasfaserrovings (E-Glas; 2400 tex) werden kontinuierlich mit einer Lösung von 0,3 g/l Butadienpalladiumdichlorid in einer 1,1,1-Trichlorethan aktiviert und getrocknet. Anschließend werden sie 1,5 Std. in einem formalinhaltigen Kupferbad (Cu: 1,5 g/l; Formaldehyd: 10 ml/l; NaOH: 5 g/l) verkupfert. Anschließend werden die metallisierten Fasern gespült, getrocknet und gecoatet. Die Kupferauflage auf dem metallisierten Fasern beträgt ca. 30 Gew.-%.

Beispiel C:

Ein Aramidfaserbündel (Kevlar 49; ca. 2400 dtex) wird gemäß bei Beispiel B kontinuierlich aktiviert und verkupfert. Anschließend wird der Faserstrang gründlich gespült und in einem aminboranhaltigen Nickelbad gemäß Beispiel A 10 Min. lang vernickelt. Danach werden die Fasern gespült, beschichtet und anschließend getrocknet. Man erhält eine Aramidfaser mit ca. 40 Gew.-% Kupfer und 3 Gew.-% Nickel.

Beispiel D:

Ein Kohlenstoffaserstrang (ca. 10 000 Filamente, 800 tex) wird gemäß Beispiel B kontinuierlich aktiviert und metallisiert und anschließend beschichtet. Man erhält eine Kohlenstoffaser mit ca. 30 Gew.-% Kupfer.

Beispiel E:

1 kg Glasfaserflock (3 mm) wird mit einer Lösung von 0,25 g Bisbenzonitrilpalladiumdichlorid in Ethanol aktiviert und getrocknet. Anschließend werden die Fasern mit einer 1 %igen Dimethylaminboranlösung vorreduziert, gespült und dann in einem hypophosphithaltigen Nickelbad 30 Min. metallisiert. Nach Spülen und Waschen erhält man ein vernickelten Glasfaserflock mit ca. 15 Gew.-% Nickel.

Beispiel F:

Glasfaserrovings (E-Glas; 2 400 tex) werden gemäß Beispiel B verkupfert, gründlich gespült und anschließend in einem aminboranhaltigen Nickelbad gemäß Beispiel A 10 Min. lang vernickelt. Danach werden die Fasern gespült, beschichtet, getrocknet. Man erhält Glasfasern mit ca. 30 Gew.-% Kupfer und 5 Gew.-% Nickel.

4

Beispiel G:

Ein Glasfasergewebe (Köperbindung, Flächengewicht ca. 120 g/m² wird gemäß Beispiel A kontinuierlich aktiviert und 30 Min. lang vernickelt. Man erhält ein metallisiertes Glasfasergewebe mit ca. 15 Gew.-% Nickel.

Beispiel 1:

Der gemäß Beispiel A Ni-metallisierter Glasroving wurde nach dem Spülbad durch ein Bad mit einer 20 %igen wäßrigen Dispersion eines Vinyl-pyridin-Styrol-Butadien-Copolymers (Pyratex 240 mit Vernetzer, Bayer AG Leverkusen) geführt. Die Durchlaufgeschwindigkeit betrug 0,50 m/Min; der gecoatete Roving wurde anschließend in drei Rohröfen (70 bis 120° C) bis zum Erreichen eines nichtklebenden Zustandes getrocknet und dann auf Rollen aufgewickelt. Die Nachvernetzung des Polymers erfolgte nach vollständiger Trocknung durch 3-minütiges Ausheizen bei 130° C. Der gecoatete Roving enthält 17 Gew.-% Polymer und wurde zu 33 Gew.-% durch Spritzguß in Polyamid 6 eingearbeitet.

Die so erhaltenen runden Prüfplatten (3 x 130 mm) zeigten im S- bzw. X-Band eine Abschirmung von 29 bzw. 45 dB.

Vergleichsbeispiel:

Prüfplatten, die aus nicht gecoateten, sonst aber gleichem Ni-metallisiertem Roving unter gleichen Bedingungen hergestellt wurden, weisen im S- bzw. X-Band Abschirmungen von 6 dB bzw. 5 dB.

Beispiel 2 - 7:

Es wurde wie im Beispiel 1 beschrieben gearbeitet, jedoch wurden Dispersionen bzw. Lösungen verschiedener Polymere eingesetzt. Die Polymere, deren Anteil sowie die Abschirmung von Prüfplatten im S- bzw. X-Band und deren Gehalt an metall. Fasern sind in Tab. 1 aufgeführt.

Tabelle 1:

| Beispiel Nr. | % metall. Glasroving | Gew.-% | COATING | Abschirmung (dB) | |
|---|---|---|---|---|---|
| | | | Polymer | S-Band | X-Band |
| 2 | 33 | 20 | Butadien-Acrylnitril-Copolymer (Latex) (Perbunan N 3310, Bayer AG) | 27 | 39 |
| 3 | 31 | 22 | Polystyrol-Butadien-Latex | 23 | 24 |
| 4 | 39 | 22 | (Baystal S 42 R, Bayer AG) | 27 | 36 |
| 5 | 31 | 7 | Polystyrol-Butadien-Latex (Baystal T 631, Bayer AG) | 19 | 33 |
| 6 | 32 | 7 | Polystyrol/acrylsäureester-Latex, 10 %ig (Acralen ATR, Bayer AG) | 16 | 22 |
| 7 | 36 | 1 | Wäßrige Celluloslösung (Walocel HT 10 PFV, Wolf-Walsrode) | 12 | 13 |

EP 0 335 185 A2

Beispiel 8 - 12:

Ni-metallisierte Glasrovings gemäß Beispiel A wurden durch Schmelzcoaten mit verschiedenen Stoffen nachbehandelt. Nach Spritzgußeinarbeitung oder so gecoateten Rovings in Polyamid 6 wurden Prüfplatten mit nachfolgenden Eigenschaften erhalten (Tab. 2):

Tabelle 2:

| Beispiel Nr. | % metall. Glasroving | Gew.-% | COATING | Abschirmung (dB) | |
|---|---|---|---|---|---|
| | | | Produkt | S-Band | X-Band |
| 8 | 33 | 36 | Pebax-Wachs (Polyesterwachs) | 12 | 25 |
| 9 | 33 | 43 | Polyamid (Durethan A 30, Bayer AG) | 15 | 15 |
| 10 | 33 | 44 | Polybutylenterephthalat | 17 | 22 |
| 11 | 35 | 44 | (Pocan 1305 natur, Bayer AG) | 19 | 24 |
| 12 | 33 | 40 | Polycarbonat (Makrolon) 2808 natur, Bayer AG) | 16 | 17 |
| 13 | 33 | 34 | Polyamid[a], (Enkalon, Enka) | 23 | 28 |

a) aus gemischtem Roving durch thermische Nachbehandlung hergestellt

Beispiel 14 - 17:

Deer gemäß Beispiel E hergestellte Ni-metallisierte Flock wurde mit nachfolgend aufgeführten Dispersionen bzw. Lösungen gecoatet, getrocknet und anschließend durch Spritzguß im Polyamid 6 eingearbeitet. Die Eigenschaften der Prüfplatten (3 x 130 mm) und die Abschirmung im S- bzw. X-Band gehen aus Tabelle 3 hervor. Der Gew.-Anteil an Coatings betrug 9 bis 18 %.

Tabelle 3

| Beispiel Nr. | % metall. Glasfaser | COATING | | Abschirmung (dB) | | X-Band Refexion (dB) |
|---|---|---|---|---|---|---|
| | | Produkt | | S-Band | X-Band | |
| 14 | 31 | Polyacrylsäureester/Styrol-Latex (Acralen ATR, 10 %ig, Bayer AG) | | 12 | 16 | 3,0 |
| 15 | 32 | Polyurethan-Dispersion (Impranil DLS, 10 %ig, Bayer AG) | | 9 | 12 | 3,1 |
| 16 | 33 | Polyamidimid-Lösung | | 13 | 17 | 3,0 |
| 17 | 30 | modif. Cellulose, 5 %ig (Walocel HT 10 PFV, Wolf-Walsrode) | | 12 | 12 | 3,0 |
| Vergleichsbeispiel: | | | | | | |
| | 34 | ohne Coating | | 7 | 9 | |

Beispiel 18 - 21:

Ein gemäß Beispiel G Ni-metallisiertes Glasgewebe wurde zuerst mit einem Polyacrylsäureester/Styrol-Latex (Acralen ATR, Bayer AG) gecoatet und anschließend durch Verpressen mit Thermoplastfolien nachbehandelt. Die enthaltenen Produkte wurden geschnitten und durch Spritzguß in Polyamid 6 eingearbeitet. Die Ergebnisse gehen aus Tab. 4 hervor.

Tabelle 4:

| Beispiel Nr. | % metall. Gewebe | Thermoplast | Abschirmung (dB) | |
|---|---|---|---|---|
| | | | S-Band | X-Band |
| 18 | 40 | Polycarbonat/Makrolon, (Bayer AG) | 35 | 54 |
| 19 | 33 | Polybutylterephthalat (Pocan 7300, Bayer AG) | 37 | 44 |
| 20 | 32 | Polyamid 66 (Durethan, Bayer AG) | 48 | >70 |
| 21 | 33 | ohne Thermoplast | 31 | 38 |
| Vergleichsbeispiel: | | | | |
| | 33 | ohne Latex-Coating, ohne Thermoplast | 6 | 8 |

Beispiel 22 - 26:

Ein gemäß Beispiel F hergestellter Cu/Ni-metallisierter Roving wurde gemäß Beispiel 1 gecoatet und anschließend durch Spritzguß in verschiedene Thermoplaste eingearbeitet. Die enthaltenen Prüfplatten, die 40 Gew.-% metallisierte Glasfaser enthalten, zeigen bei 27,12 MHz die in Tabl. 5 aufgeführten Abschirmwerte. Eine nach Beispiel F hergestellte, jedoch nicht gecoatete Faser zeigte bei dieser Frequenz in allen Thermoplasten keine Abschirmung.

Tabelle 5:

| Beispiel Nr. | Thermoplast | Abschirmung bei 27,12 MHz (dB) (magnetische Komponente) |
|---|---|---|
| 22 | Polyamid 6 (Durethan B 30, Bayer AG) | 26 |
| 23 | Polycarbonat (Makrolon 2400, Bayer AG) | 21 |
| 24 | ABS/Polycarbonat-Blend (Bayblend, Bayer AG) | 22 |
| 25 | Polybutylenterephthalat (Pocan, Bayer AG) | 23 |
| 26 | Acrylnitril-Styrol-Butadien-Copolymerisat (Novodur, Bayer AG) | 23 |

Beispiel 27:

Ein gemäß Beispiel B Cu-metallisierter Glasroving wurde gemäß Beispiel 1, jedoch mit verschiedenen Polymermengen nachgecoatet und in Polyamid 6 eingearbeitet. Je nach Gehalt an metallisierter Glasfaser wurden Prüfplatten mit nachfolgenden Eigenschaften erhalten (Tab. 6):

Tabelle 6:

| Gew.-% metallisierte Faser | Abschirmung bei 27,17 MHz (dB) nach Coaten mit Gew.-% Polymer | | |
|---|---|---|---|
| | 3 | 9 | 17 |
| 20 | 1 | 6 | 6 |
| 30 | 4 | 18 | 19 |
| 40 | 9 | 23 | 22 |
| 50 | 14 | 31 | 30 |

Beispiel 28:

Ein gemäß Beispiel D Cu-metallisierter Kohlenstoffroving wurde gemäß Beispiel 1 nachgecoatet und bei Polyamid 6 eingearbeitet. Eine 12 Gew.-% Cu enthaltende Prüfplatte zeigte bei 27,1 MHz eine Abschirmung von 24 dB. Ein nach gleichem Verfahren hergestellter, jedoch nicht nachgecoateter Roving wies bei 27,12 MHz (mg, Komponente) eine Abschirmung von 1 dB auf.

Beispiel 29:

Ein analog Beispiel D Cu-metallisierter Aramidroving wurde wie im Beispiel 1 beschrieben gecoatet und anschließend in Polyamid 6 eingearbeitet. Eine 11 Gew.-% Cu enthaltende Prüfplatte zeigte bei 27,12 MHz (mg. Komponente) eine Abschirmung von 21 dB. Ein gleicher, jedoch nicht gecoateter Roving wies bei 27,12 MHz keine Abschirmung auf.

Beispiel 30:

Ein gemäß Beispiel B Cu-metallisierter Roving wurde nacheinander mit 2,7 Gew.-% Latex gemäß Beispiel 1 und 20 Gew.-% Polyamid 66 gecoatet. Nach Spritzguß-Einarbeitung in Polyamid 6 wurden Prüfplatten erhalten, deren Abschirmung bei verschiedenen Glasfasergehalten aus Tab. 7 ersichtlich ist:

Tabelle 7:

| Gew.-% metall. Glasroving | Abschirmung bei 27,12 MHz (dB) (mg. Komponente) |
|---|---|
| 25 | 30 |
| 35 | 32 |
| 40 | 40 |
| 45 | 42 |

Die Abschirmung (mg. Komponente) einer 34 Gew.-% wie oben beschrieben gecoateten metall. Glasfaser enthaltenden Prüfplatte bei verschiedenen Frequenzen geht aus Tab. 8 hervor.

Tabelle 8:

| Frequenz (MHz) | Abschirmung (dB) |
|---|---|
| 1 | 2 |
| 5 | 7 |
| 10 | 18 |
| 20 | 26 |
| 30 | 32 |
| 100 | 35 |
| 300 | 34 |

Beispiel 31:

Es wurde wie in Beispiel 30 beschrieben gearbeitet, jedoch wurden verschiedene Thermoplaste als Matrix und zum Nachcoaten der Fasern 20 % Polycarbonat (Makrolon 2800, Bayer AG) eingesetzt. Die Abschirmung von Prüfplatten mit einem Anteil an Cu-metallisierter Faser von 40 Gew.-% geht aus Tab. 9 hervor:

Tabelle 9:

| Thermoplast | Abschirmung bei 27,12 mHz (dB) |
|---|---|
| Polybutylenterephthalat (Pocan, Bayer AG | 36 |
| Acrylnitril-Styrol-Butadien-Copolymerisat (Novodur, Bayer AG) | 37 |
| Polycarbonat (Makrolon, Bayer AG) | 28 |
| Polyamid 6 (Durethan B 30, Bayer AG) | 33 |

**Ansprüche**

1. Metallisierte Fasern enthaltende Verbundstoffe, dadurch gekennzeichnet, daß die Fasern mit mehreren Polymer-Beschichtungen von mindestens 5 - 95 Gew.-%, bezogen auf den Verbundstoff versehen sind.

2. Verbundstoffe gemäß Anspruch 1, dadurch gekennzeichnet, daß der Beschichtungsanteil 7 - 70 Gew.-% beträgt.

3. Verbundstoffe gemäß Anspruch 1, dadurch gekennzeichnet, daß der Beschichtungsanteil 10 - 30 Gew.-% oder 60 - 90 % beträgt.

4. Verbundstoffe gemäß Anspruch 1, dadurch gekennzeichnet, daß die Beschichtungen aus einer Kombination aus einem elastomeren und einem thermoplastischem Material oder aber aus zwei verschiedenen Thermoplasten besteht.

5. Verbundstoffe gemäß Anspruch 1, dadurch gekennzeichnet, daß die Herstellung der Beschichtungen aus Schmelzen, Lösungen , Dispersionen oder durch Pulverbeschichtung erfolgt.

6. Verbundstoffe gemäß Anspruch 1, dadurch gekennzeichnet, daß die darin enthaltenen Fasern Glas-, Kohlenstoff-, Graphit- oder Aramidfasern sind.

7. Verbundstoffe gemäß Anspruch 1, dadurch gekennzeichnet, daß die darin enthaltenen Fasern eine Länge von 1 - 60, vorzugsweise von 3 - 30 und besonders bevorzugt von 5 - 20 mm aufweisen.

8. Verbundstoffe gemäß Anspruch 1, dadurch gekennzeichnet, daß die Metallauflagen der Fasern aus Nickel, Silber und vorzugsweise aus Kupfer und deren Legierungen auch mit anderen Metallen besteht.

9. Verfahren zur Herstellung von Formkörpern zur elektromagnetischen Beschirmung durch Spritzguß, dadurch gekennzeichnet, daß man Verbundstoffe der Ansprüche 1 - 8 verwendet.

10. Verfahren nach Anspruch 9, dadurch gekennzeichnet, daß die Verbundstoffe gemeinsam mit Thermoplast-Pellets eingesetzt werden.